# EUROPEAN PATENT APPLICATION

(11) **EP 2 602 712 A1**
(43) Date of publication of application: **12.06.2013**
(21) Application number: 11814617.4
(22) Date of filing: 01.08.2011
(51) Int. Cl.: G06F 9/44

(54) **PROGRAM-PRODUCING DEVICE AND IMAGE CONTROL SYSTEM**

(30) Priority: 06.08.2010 JP 2010177400
(71) Applicant: Mitsubishi Heavy Industries, Ltd., Tokyo 108-8215 (JP)
(72) Inventor: MORIMOTO, Kenichi, Tokyo 108-8215 (JP)
(74) Representative: Intès, Didier Gérard André
(86) International application number: PCT/JP2011/067614
(87) International publication number: WO 2012/017992

(57) **Abstract**

In a program creating system (10), an image that implements prescribed behavior on the screen of an image display unit (20) is drawn with a drawing tool (14), and with an FBD drawing tool (16), by handling the image drawn with the drawing tool (14) in the form of an object and connecting a signal line for implementing the behavior to the object, the behavior that the image implements is defined, and the processing flow for the image to implement the defined behavior is described with an FBD language. Accordingly, it is possible to easily create a program that realizes highly representative image display.

## Description

### {Technical Field}

The present invention relates to a program creating apparatus and an image control system.

### {Background Art}

In the related art, a program used when performing running and monitoring operations for machinery, a plant, etc. with a graphical user interface using a personal computer or the like has been developed in the manner described below.

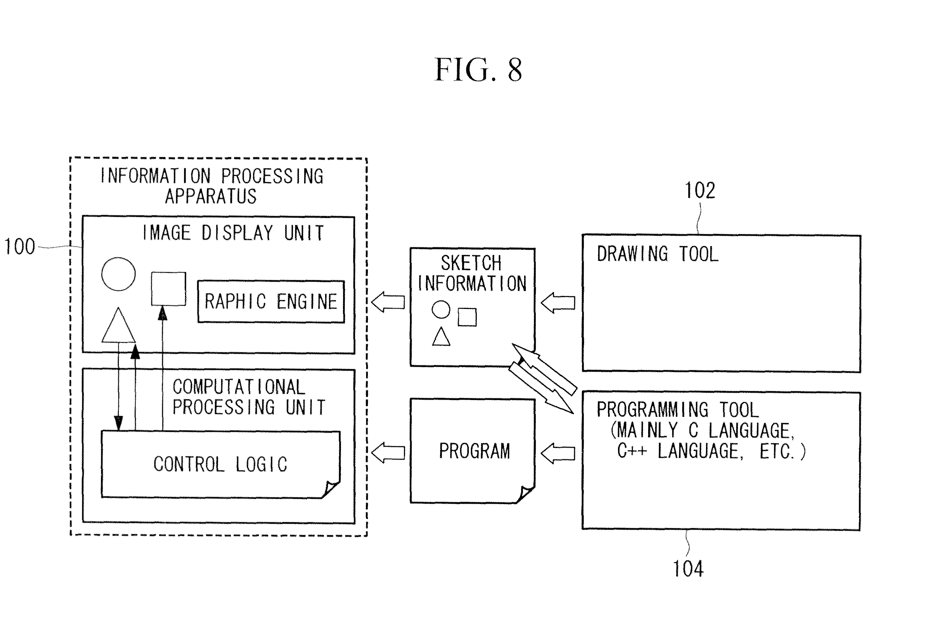

Fig. 8 is a schematic diagram showing the process of developing the program described above.
In the related art, for example, a drawing tool 102 using a mouse, such as a graphic editor etc., is employed as a tool for drawing an image to be shown on the screen of an image display unit 100. Therefore, the contents of the drawing can be visualized, and the operator performing the drawing can draw while checking the contents of the drawing.
On the other hand, a programming tool 104 using a structured language (a language for describing an operation with a list of functions and arguments), such as the C++ language, JAVA, etc., is employed as a tool for creating a program. Therefore, the program must be designed by an operator familiar with programming languages, and that operator must have special knowledge and technical skill different from the operator who uses the drawing tool.

In addition, in the method generally used to visualize the operating state of the logic (processing) described with a programming language, the program is temporarily stopped at every major place in its operation, the values of variables in the program are displayed by building mechanisms called breakpoints into the program for interrupting the processing, and the operating state is confirmed by executing the program one line at a time, i.e., so-called step execution. With this method, however, operations in response to actions at the screen display unit 100 (events such as button clicks and so forth), as well as the connections between the program operation and actions, are difficult to confirm in real time. Therefore, when the program does not perform an expected operation, the operator of the program must make some effort to adjust the response timing etc. with respect to actions.
Thus, as a technology aimed at enabling the operator to easily realize the programming task to visually create a program in an intuitive environment, Patent Literature 1 discloses a visual programming method in which a program is automatically generated by selecting graphical objects, which are objects defining the operation, and the properties of those graphical objects, by defining the relationships among a plurality of selected graphical objects, and by setting the operating rules of the selected graphical objects.
A system known as a SCADA (Supervisory Control Data Acquisition) that performs system monitoring, process control, etc. with a computer is used in plants and so forth. A SCADA system performs system monitoring, process control, etc. via a monitoring screen on which "ON", "OFF", or "value" signals are assigned to images drawn with a drawing tool like that described above, and the images change in response to changes in signals produced on a separate system.

### {Citation List}

### {Patent Literature}

{PTL 1}
   PCT International Publication No. WO 98/040817

### {Summary of Invention}

### {Technical Problem}

However, with the technology disclosed in Patent Literature 1, the programming operator can select only predetermined graphical objects and their properties, and it has not been possible to realize highly representative images on the screen of the image display device.
In addition, in a SCADA system, on the separate system, there is no information on the screen on which images are displayed; therefore, signals for individual events etc. are managed according to assigned numbers or the like, which increases the management work to be carried out by operator, such as giving unique names to a large number of signals. Also, because it is necessary to predefine the interface between the separate system and the SCADA system, there has been a restriction in terms of image representation in that it has only been possible to represent, for example, a "color change" or "value change", etc. in a simple manner in the form of an image. Therefore, in SCADA systems, it has not been possible to achieve a high degree of representativeness, such as combining, for example, video, map information, etc. in the image displayed on the screen; although a simple monitoring screen can be created, it has not been easy to construct a highly representative monitoring image.
On the other hand, by using a special application development framework (rich client technology), it is possible to realize highly representative image display. This is a framework that allows the behaviors of drawn image components to be programmed by implementing the drawing tool 102 and the programming tool 104 shown in Fig. 8 with the same tool. However, this technology sometimes uses C++ or the like as the programming language, and in such cases, the operator needs to be knowledgeable about high-level programming. In addition, there is a problem in that, in cases where a programming language is not used, although the operation is specified by giving behavior parameters called "properties" to the image components in advance, it is difficult to visualize the operating state.

The present invention has been conceived in light of such circumstances, and an object thereof is to provide a program creating apparatus and image control system that enable straightforward creation of a program that realizes highly representative image display.

### {Solution to Problem}

In order to solve the above problems, the program creating apparatus and image control system of the present invention employ the following solutions.

Specifically, a program creating apparatus according to a first aspect of the present invention is a program creating apparatus for creating a program causing a computer to execute processing for controlling an image displayed on a screen of an image display device, including drawing means for drawing an image that implements prescribed behavior on the screen of the image display device; and processing describing means for defining the behavior that the image implements, by handling the image drawn by the drawing means as an object and connecting a signal line to the object to make the object implement the behavior, and for describing a processing flow for the image to implement the defined behavior with a function block diagram language.

With the above configuration, the image that implements the prescribed behavior on the screen of the image display device is drawn with the drawing means. In other words, the operator does not use an image determined in advance as the image that is controlled by the program, but can use various arbitrary images drawn with the drawing means.
The term image used here includes, for example, a shape, a combination of a plurality of shapes, a photographic image, a video image, and so forth.
The behavior of the image means a change in the image shape, a change in the image color, image deletion or appearance, movement of the image, replacement of the image, and so forth. Note that, replacing the image includes replacing the image showing the entire screen, in other words, the page. These image behaviors are included in a function related to image processing in the image display device.

Thus, by handling the image drawn with the drawing means in the form of an object and connecting a signal line to the object for implementing the behavior, by using the processing describing means, the behavior that the image implements is defined, and the processing flow for the image to implement the defined behavior is described using the function block diagram language.
The function block diagram (Function Block Diagram is hereinafter referred to as "FBD") language is a programming language for representing the processing flow by joining element symbols and element symbols with signal lines, and because the operator draws the processing flow using shapes indicating element symbols and shapes indicating signal lines, the operator can program in a manner similar to drawing a picture. Therefore, even an operator who is not proficient in high-level programming languages, such as the C++ language, can easily create a program.
Thus, the behavior that the image implements is defined by handling the image drawn with the drawing means in the form of an object in the FBD language and connecting a signal line to the object for implementing the behavior.

In this way, in the present invention, an arbitrary image is drawn with the drawing means, and the image behavior is defined with the processing describing means so that the processing flow for the image to implement the defined behavior is described using the FBD language; therefore, it is possible to easily create a program that realizes highly representative image display.

In the first aspect described above, the image drawn with the drawing means may have information representing the image as the object; and the processing describing means may describe the processing flow for implementing the behavior of the image with the function block diagram via the information.

With the configuration described above, the image drawn with the drawing means contains information that represents the image in the form of an object. The image is meta data representing the attributes of the image and is written, for example, in XML (extensible Markup Language).
Thus, the processing flow for implementing the image behavior is described in the FBD language with the processing describing means, via the above information.
In this way, the present invention creates a program via the information representing the image attributes and the possible behaviors of the image; therefore, an apparatus having the drawing means and an apparatus having the processing describing means can be realized, and as a result, it is possible to separately perform the task of drawing an image and the task of creating a program with the FBD language.

In the first aspect described above, when a new behavior is defined for the image by the processing describing means, a parameter for implementing the behavior may be inserted in the information, and the information may be stored in the image display device.
With the configuration described above, when a new behavior is defined for the image with the processing describing means, a parameter for implementing that behavior is inserted in the information that represents the image in the form of an object, and the information is stored in the image display device. By doing so, when the program representing the processing described with the processing describing means is executed, the image display device can display the image in such a manner that it implements the behavior defined with the processing describing means using the above-described information.

On the other hand, an image control system according to a second aspect of the present invention includes an image display device that stores attributes of an image drawn by drawing means and information representing behavior that the image implements; and a computing device that stores a program describing, with a function block diagram language, a processing flow for the image represented by the information to implement the behavior represented by the information, wherein the computing device executes processing represented by the program, and the image display device displays the image in such a manner as to implement the behavior represented by the information based on details of the processing performed by the computing device.

With the configuration described above, the image display device stores the information representing attributes of the image drawn with the drawing means and the behavior that the image implements.
The term image above means, for example, a shape, a combination of a plurality of shapes, a photographic image, a video image, etc., and is an image that the operator has drawn using the drawing means. In addition, the term behavior means a change in the image shape, a change in the image color, deletion or appearance of the image, movement of the image, replacement of the image, and so forth. In particular, replacement of the image includes replacement of the image showing the entire screen, in other words, the page. That is to say, these image behaviors are included in a function related to image processing in the image display device.
On the other hand, the computing device stores the program describing, in the FBD language, the processing flow for the image represented by the above information to implement the behavior represented by the above information.

In addition, by handling the image drawn with the drawing means in the form of an object and connecting a signal line to that object for implementing the behavior, the program defines the behavior that the image implements and also describes, in the FBD language, the processing flow for the image to implement the defined behavior.

Then, the computing device executes the processing represented by the program, and the image display device displays the image in such a manner that is implements the behavior represented by the above information based on the processing performed by the computing device; therefore, it is possible to realize highly representative image display with a program created using the FBD language.

### {Advantageous Effects of Invention}

The present invention affords an excellent advantage in that it is possible to easily create a program that realizes highly representative image display.

### {Brief Description of Drawings}

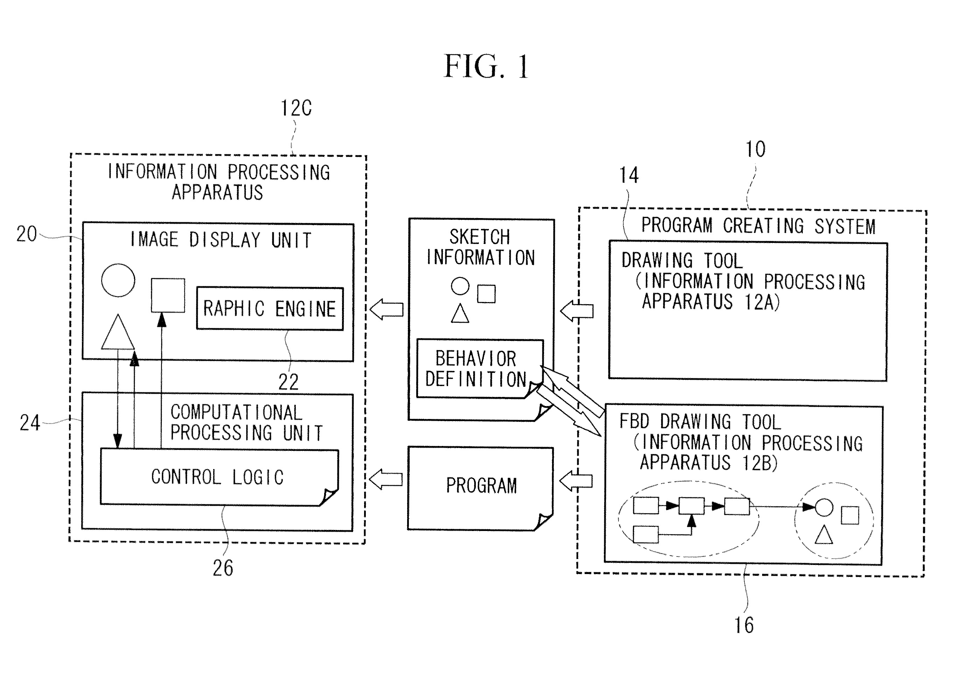

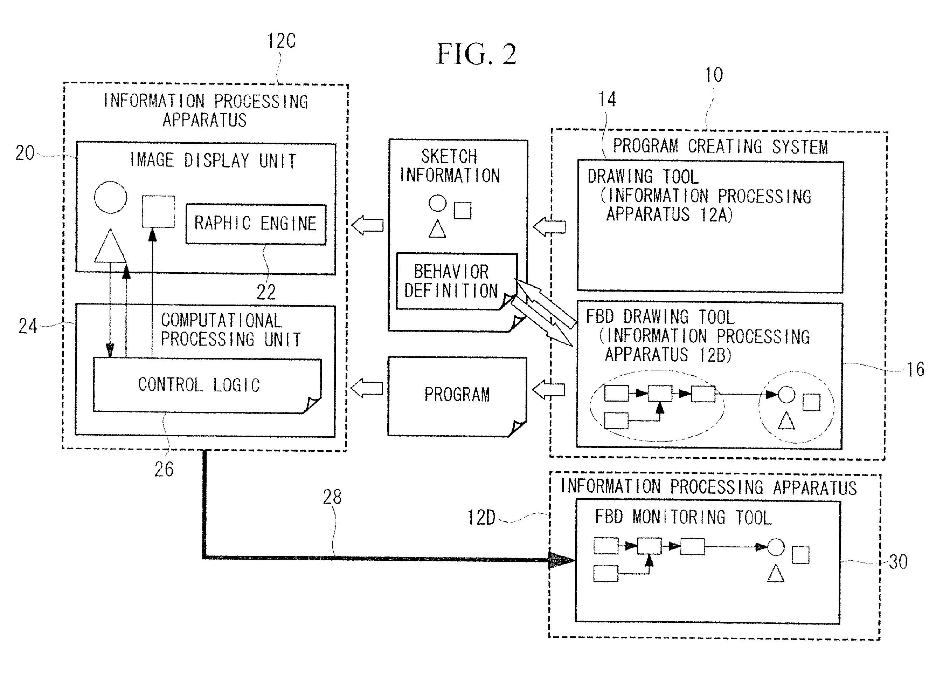

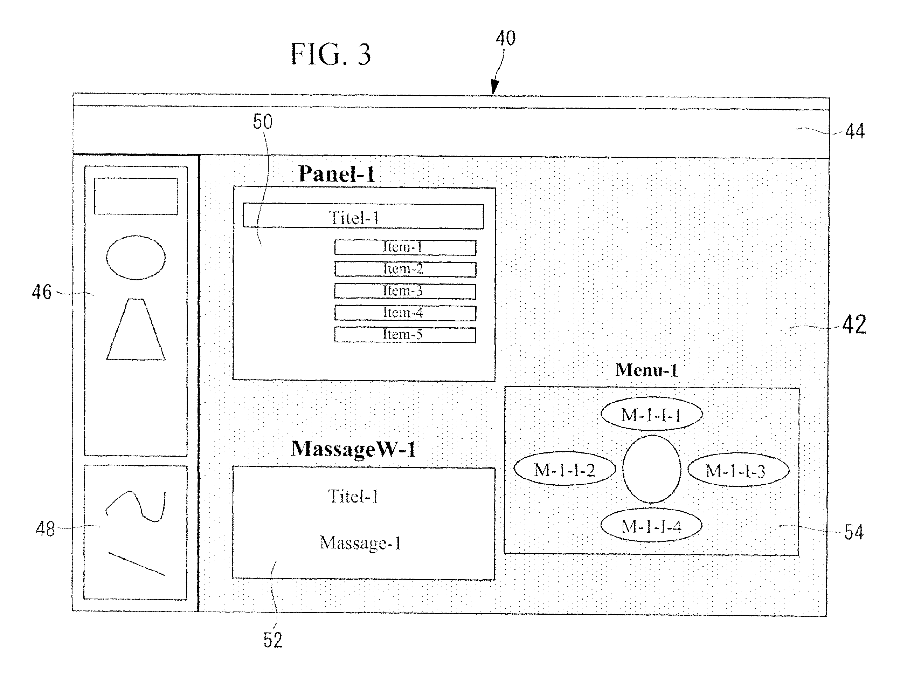

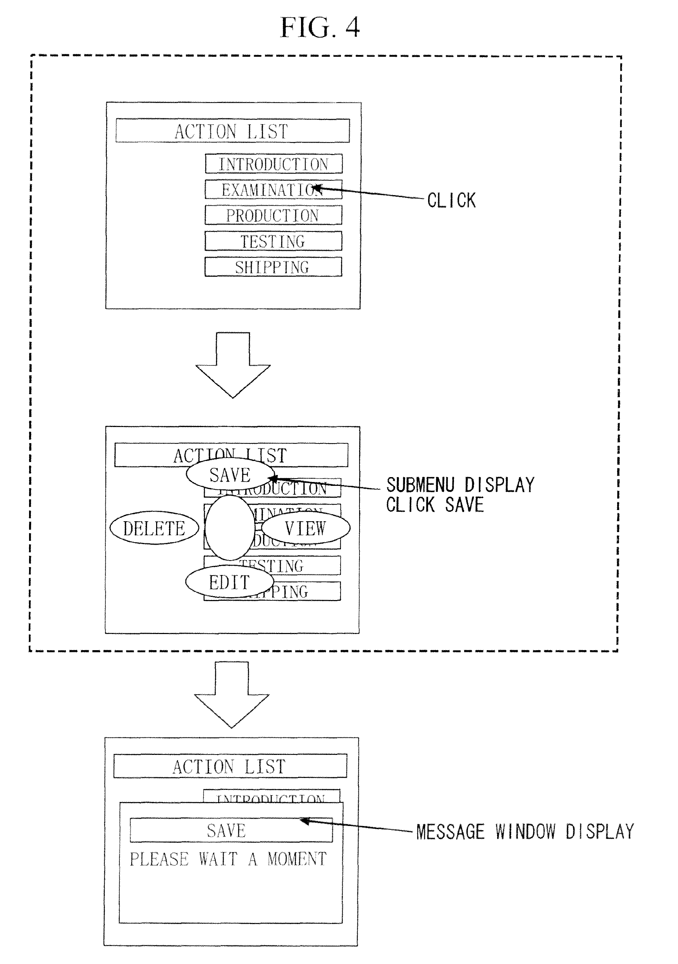

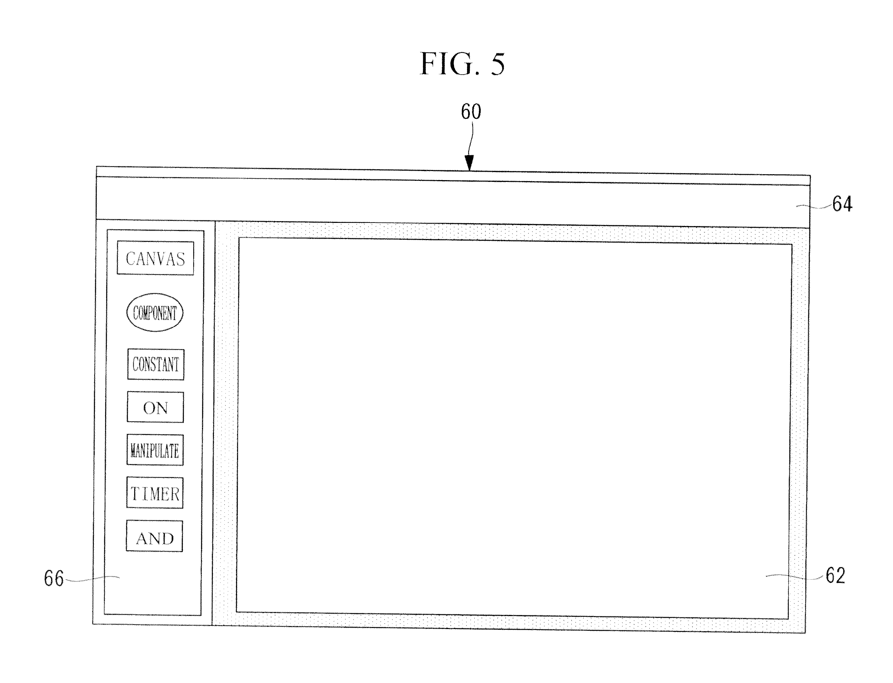

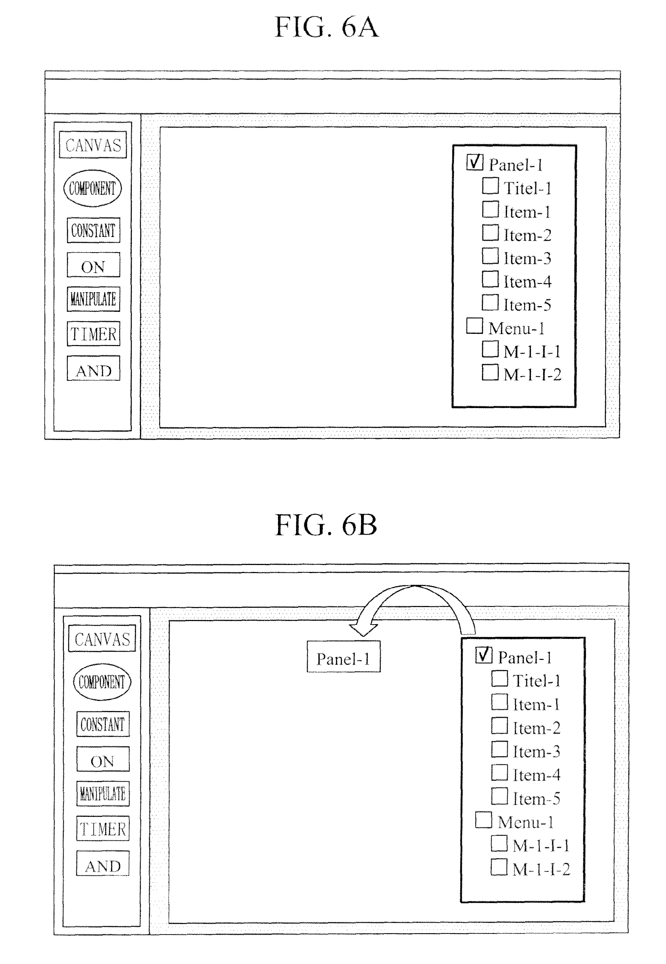

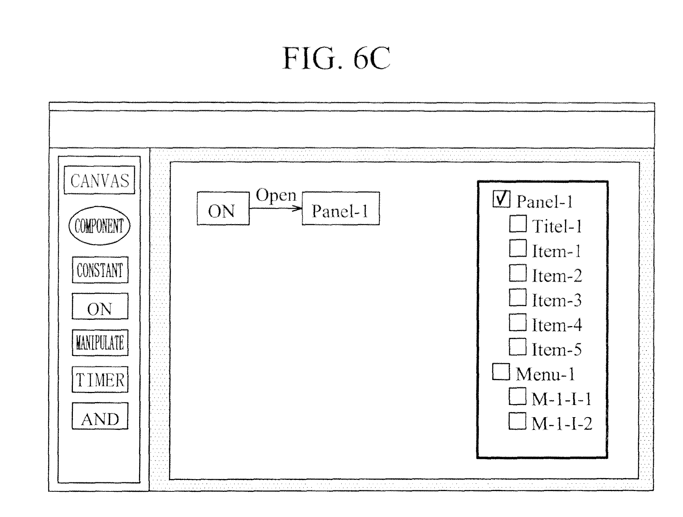

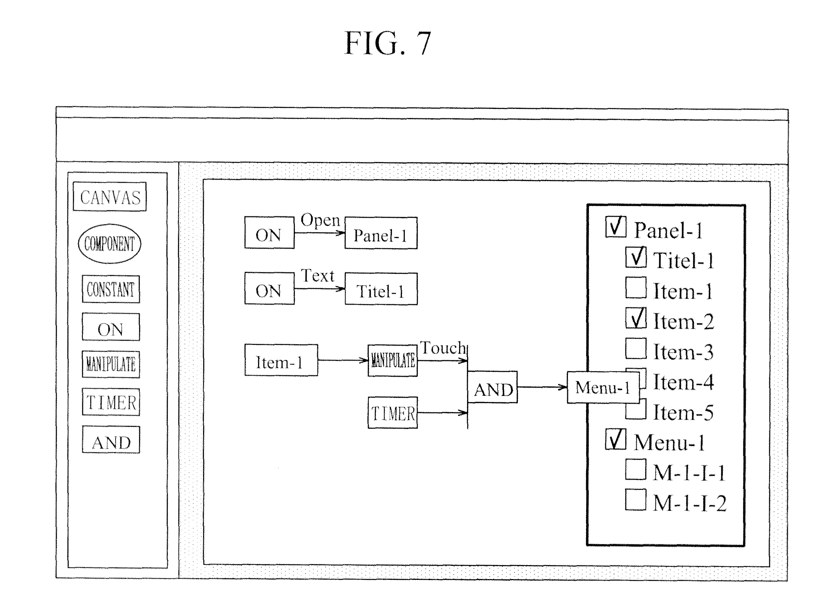

{Fig. 1} Fig. 1 is a diagram showing the configuration of a program creating system according to an embodiment of the present invention.
{Fig. 2} Fig. 2 is a diagram showing the configuration in a case where a monitoring tool for monitoring program processing according to an embodiment of the present invention is provided.
{Fig. 3} Fig. 3 is a diagram showing an example of a drawing editor screen displayed on a screen of an information processing apparatus provided with a drawing tool according to an embodiment of the present invention.
{Fig. 4} Fig. 4 is a schematic diagram showing a processing flow drawn with an FBD drawing tool according to an embodiment of the present invention.
{Fig. 5} Fig. 5 is a schematic diagram of an example FBD drawing screen displayed on the screen of the information processing apparatus provided with the FBD drawing tool according to an embodiment of the present invention.
{Fig. 6A} Fig. 6A is a schematic diagram needed for explaining the flow of drawing an FBD diagram using the FBD drawing tool according to an embodiment of the present invention.
{Fig. 6B} Fig. 6B is a schematic diagram needed for explaining the flow of drawing an FBD diagram using the FED drawing tool according to an embodiment of the present invention.
{Fig. 6C} Fig. 6C is a schematic diagram needed for explaining the flow of drawing an FBD diagram using the FBD drawing tool according to an embodiment of the present invention.
{Fig. 7} Fig. 7 is a schematic diagram needed for explaining the flow of drawing an FBD diagram using the FBD drawing tool according to an embodiment of the present invention.
{Fig. 8} Fig. 8 is a schematic diagram needed for explaining a program development process in the related art.

### {Description of Embodiments}

An embodiment of a program creating apparatus and image control system according to the present invention will be described below with reference to the drawings.
Fig. 1 shows the configuration of a program creating system 10 according to this embodiment. The program creating system 10 is a system for creating a program that causes a computer to execute processing for controlling an image displayed on the screen of an image display unit 20 in an information processing apparatus 12C, such as a personal computer.
Note that the program created with the program creating system 10 realizes a function for performing a running operation, a monitoring operation etc. of, for example, machinery, a plant, or the like by means of a graphical user interface using the information processing apparatus 12C.

The program creating system 10 according to this embodiment includes an information processing apparatus 12A, which is provided with a drawing tool 14, and an information processing apparatus 12B, which is provided with an FBD drawing tool 16.
The drawing tool 14 is a tool with which an operator draws an image that implements prescribed behavior on the screen of the image display unit 20, for example, a drawing tool using a mouse, such as a graphic editor etc.
Note that the image drawn with the drawing tool 14 includes, for example, a combination of a plurality of shapes, a photographic image, a video image, etc.
Furthermore, image behavior means a change in the shape of the image, a change in the color of the image, deletion or appearance of the image, movement of the image, replacement of the image, and so forth. Replacing the image includes replacing the image displaying the entire screen, that is to say, the page. These image behaviors are included in a function related to image processing in a graphic engine 22 provided in the image display unit 20.
Furthermore, the drawing tool 14 creates meta data (hereinafter referred to as "sketch information") in which the drawn image is described in the form of graphical objects. The sketch information serving as the meta data is described in a format representing the attributes of the image (in this embodiment, XML (extensible Markup Language)). In particular, in this embodiment, because the sketch information is described in XML, it is possible to use the graphical objects described in the sketch information with any program.
Note that the above-mentioned image attributes are, more specifically, the image shape, image size, position on the screen, etc.

The FBD drawing tool 16, on the other hand, is a tool with which the operator defines the behavior that the image is to implement and describes the processing flow for the image to implement the defined behavior in an FBD language, by handling the image drawn with the drawing tool 14 in the form of objects and connecting signal lines for implementing the above behavior to the objects.

Here, the FBD language is a programming language representing the processing flow by joining element symbols and element symbols with signal lines, and the operator draws the processing flow using shapes indicating the element symbols and shapes indicating the signal lines (the diagram drawn is referred to as an FBD diagram); therefore, the operator can program in a manner similar to drawing a picture. In addition, because the signal flow is represented by the signal lines connecting element symbols and element symbols, management of assigned numbers is not required. By using the FBD language in this way, even an operator who is not proficient in high-level programming languages, such as the C++ language, can easily create a program.
Furthermore, as a feature of the FBD language, it is possible to visualize the operating state of the program with the FBD diagram, which allows the processing state of the language to be checked in real time in a straightforward manner, and also facilitates adjustment of parameters.

The FBD drawing tool 16 according to this embodiment creates a program with the FBD language via the sketch information in which the drawn image is described in the form of graphical objects.
In other words, with the FED drawing tool 16 according to this embodiment, the graphical objects are recognized by reading in the sketch information, and the FBD diagram is drawn by joining element symbols representing graphical objects and element symbols for computations with the signal lines.
Thus, in drawing the FBD diagram, the image behavior is defined by connecting, to element symbols representing the graphical objects, signal lines for controlling the image behavior corresponding to those element symbols.

Also, when new behavior is defined for the image with the FBD drawing tool 14, parameters for implementing that behavior are inserted into the sketch information.

On the other hand, the sketch information and the program based on the processing flow described in the FBD language with the FBD drawing tool 16 are sent to the information processing apparatus 12C, where the sketch information is stored in the image display unit 20, and the program is stored in the computational processing unit 24.
The computational processing unit 24 executes the processing represented by the stored program on control logic 26. Then, via the graphic engine 22, the image display unit 20 displays an image in such a manner as to implement the behavior represented by the sketch information, based on the details of the processing performed by the computational processing unit 24. Note that, when an operation (a mouse operation, a touch panel operation, or the like) is performed on the image display unit 20, information representing the details of that operation is transmitted from the image display unit 20 to the computational processing unit 24, and the computational processing unit 24 then performs the processing represented by the program according to the transmitted information.

Fig. 2 is a diagram showing the configuration in the case where a monitoring tool 30 for monitoring the processing of the program created in the FBD language is provided.
In this embodiment, the monitoring tool 30 is provided in an information processing apparatus 12D, and the information processing apparatus 12C and the information processing apparatus 12D are connected via a communication circuit 28, so that information representing the processing state of the program being executed on the information processing apparatus 12C is transmitted from the information processing apparatus 12C to the information processing apparatus 12D.

The monitoring tool 30 is a tool that allows the operator to easily confirm the processing state of the program by displaying on the screen of an image display unit in the information processing apparatus 12D an image identical to the image displayed on the image display unit 20, together with the FBD diagram, and displaying (visualizing) the flow of signals on the FBD diagram. For example, signal lines on which ON signals flow are displayed in red, and signal lines on which OFF signals flow are displayed in blue. In addition, for signal lines on which values flow, those values are displayed on the signal lines. Note that the term value here includes values for use in the image behavior displayed on the image display unit 20.

Next, the flow for creating a program on the program creating system 10 will be described.
In the FBD drawing tool 16 of the program creating system 10, image-processing-related functions (Application Program Interface (API)) possessed by the graphic engine 22 are prescribed in advance as parameters. In other words, the FBD drawing tool 16 can give parameters prescribed in advance to the image, including image behaviors. Table 1 shows examples of the above parameters.

**{Table 1}**

| IMAGE SHAPE PARAMETERS | |
|---|---|
| | · HORIZONTAL, VERTICAL, AND DEPTH ZOOM FACTORS (ZOOM FACTORS RELATIVE TO STANDARD SIZE) |
| | · SHAPE OUTLINE COLOR (COLOR INCLUDES TRANSPARENCY, |
| | BRIGHTNESS, PATTERN, THICKNESS, ETC.) |
| | · SHAPE TEXTURE (SURFACE MATERIAL) |
| | · LIGHT POINT (LOCATION WHERE LIGHT SHINES: x, y, z) |

| IMAGE BEHAVIOR PARAMETERS | |
|---|---|
| | · CONSTRUCTION (BEHAVIOR WHEN DISPLAYED ON SCREEN) |
| | · REMOVE (BEHAVIOR WHEN REMOVED FROM SCREEN) |
| | · MOVE (MOVE FROM x, y, z TO x', y', z', SPEED AND ROTATION, ROTATION ANGLE) |

| IMAGE ACTION PARAMETERS | |
|---|---|
| | · PRESS (CLICK DOWN) |
| | · PRESS AND RELEASE (CLICK, AND LIFT AT SAME POSITION) |
| | · DRAG |
| | · RIGHT CLICK |
| | · DOUBLE CLICK |
| | · PINCH |
| | · SWIPE |
| | · STRETCH (STRETCH WITH TWO FINGERS) |
| | · SQUEEZE (SQUEEZE WITH TWO FINGERS) |
| | · TURN (ROTATE WITH TWO FINGERS) |

| OTHER PARAMETERS | |
|---|---|
| | · HIGHLIGHT |
| | · HIDE |

Note that either image creation using the drawing tool 14 or processing flow description in the FBD language using the FBD drawing tool 16 may be performed first by the operator. In the following, a description is given of the case where the operator performs image creation using the drawing tool 14, and then performs processing flow description in the FBD language using the FBD drawing tool 16.

Fig. 3 is an example of a draw editor screen 40 displayed on the screen of the information processing apparatus 12A provided with the drawing tool 14.
The drawing editor screen 40 has a drawing area 42 for drawing images.
A drawing editor control menu 44 for controlling the drawing editor screen 40 is disposed above the drawing area 42. On the other hand, a basic-shape display portion 46 for selecting a basic shape such as a rectangle, a circle, a trapezoid, or the like and drawing it in the drawing area 42 and a description tool display portion 48 for selecting a description tool such as a straight line, a curved line, or the like and drawing it in the drawing area 42 are disposed to the left of the drawing area 42.

Then, the operator selects shapes or lines from the basic-shape display portion 46, the description-tool display portion 48, etc. and draws an arbitrary shape in the drawing area 42 by combining the selected shapes and lines. Note that the drawing tool 14 can also read in a video image, photographic image, etc., display it in the drawing area 42, and combine it with images.
In the example in Fig. 3, an image formed as a planar canvas 50 is an image to be displayed on the entire screen of the image display unit 20. An image formed as a popup canvas 52 is a dialog box that is to be displayed when a prescribed operation (for example, clicking on an image formed as a button) is performed, and an image formed as a transparent canvas 54 is a menu screen having a transparent background, which is to be displayed when a prescribed operation (for example, clicking on an image formed as a button) is performed.

Next, when drawing of image components is completed, a unique name is assigned to each image identified as a single unit (hereinafter referred to as "image component"). Note that each canvas must also be recognized as an image component and is thus assigned a unique name. Any name can be used so long as it allows identification of each image, such as letters, numbers, or a combination of letters and numbers.
In Fig. 3, the combination of letters and numbers written above each canvas is the name of the corresponding canvas, and the combination of letters and numbers written overlapping each image component is the name of the corresponding image component.

Then, when storage of the drawn image components is executed, graphic objects representing the drawn image components are created in the form of sketch information (meta data) in XML format.
The above description is the flow for drawing image components using the drawing tool 14.

Next, description of the processing flow in the FBD language using the FBD drawing tool 16 will be described. In the following, as shown in Fig. 4, a description is given of a case in which, when "examination" is clicked on the planar canvas 50 displayed on the screen, the processing flow up to the point when a submenu formed as the transparent canvas 54 is displayed is described in the FBD language.

Fig. 5 shows an example of an FBD drawing screen 60 displayed on the screen of the information processing apparatus 12B provided with the FBD drawing tool 16.
The FBD drawing screen 60 has a drawing area 62, which is a region for drawing the FBD diagram.
An FBD drawing control menu 64 for controlling the FBD drawing screen 60 is disposed above the drawing area 62. On the other hand, a component and symbol display portion 66 for selecting components and control symbols used in drawing the FBD diagram and drawing them in the drawing area 62 is disposed to the left of the drawing area 62.

When drawing the FBD diagram with the FBD drawing tool 16, the operator reads in the sketch information into the FBD drawing tool 16. Once the sketch information has been read in, as shown in Fig. 6A, a list of names of the objects corresponding to the image components drawn with the drawing tool 14 is displayed in the drawing area 62.

Next, as shown in Fig. 6B, the operator places a desired image component in the drawing area 62 by dragging-and-dropping it from the list. By doing so, the selected image component is displayed in the drawing area 62 in such a manner that the name of the selected image component is written in a rectangular element symbol. In other words, the element symbol in which the name of the image component is written shows an image representation for that image component.
A check mark is inserted in the list at the name of the selected image component. By doing so, the operator can easily determine whether image components are selected or unselected.

Next, the operator connects a signal line to the image component for controlling the behavior. Fig. 6C is a connection example in a case in which an image component "Panel-1" is always displayed on the screen; in this case, an element symbol that always outputs an "ON" signal is connected to an input position "Open" of the element symbol indicating the image component "Panel-1" via a signal line. Note that, for an image component to which a signal line is not connected, an initial value is inserted in the properties of the component as a constant.
The image behavior corresponding to each image component is defined by connecting an element symbol that outputs a signal to the element symbol indicating the image component via the signal line in this way.
Fig. 7 is an FBD diagram for implementing the processing shown in Fig. 4; as shown in the figure, the operator completes the FBD diagram by connecting element symbols used for the computations required in the processing sequence and element symbols indicating the image components with signal lines.
Note that communication, information extraction etc. are drawn in the drawing area 62 in the same way as described above, using special element symbols for that purpose. In addition, the signals that can be input to each element symbol are "floating point", "on", "off", "integer" and "character".

Next, once creation of the FBD diagram has been completed, the FBD diagram is stored in storage means, which is not illustrated. At the time of this storing step, a parameter that represents a behavior newly added by drawing the FBD diagram is inserted in the sketch information, and the sketch information is updated. Note that the FBD diagram is compiled into the form of a program that can be executed on a computer.
Then, the sketch information is transmitted to the image display unit 20, the program is transmitted to the computational processing unit 24, and the sketch information and the program start to operate in an interlinked manner.

Note that, after describing the processing flow in the FBD language using the FBD drawing tool 16, when performing image formation using the drawing tool 14, first, sketch information in which the minimum attributes of the image components that will become graphic objects is created in XML, and, using this sketch information, the image behaviors are defined and the program representing the processing flow is drawn with the FBD drawing tool 16. Then, based on the sketch information, an image is drawn with the drawing tool 14, and the sketch information is updated on the basis of what is drawn.

As described above, in the program creating system 10 according to this embodiment, an image for implementing prescribed behavior on the screen of the image display unit 20 is drawn with the drawing tool 14, and, with the FBD drawing tool 16, by handling the image drawn with the drawing tool 14 in the form of an object and connecting a signal line for implementing the behavior to that object, the behavior that the image implements is defined, and the processing flow for the image to implement the defined behavior is written in the FBD language.
By doing so, the program creating system 10 according to this embodiment can easily create a program that realizes highly representative image display.

Furthermore, in the program creating system 10 according to this embodiment, the image drawn with the drawing tool 14 has sketch information representing the image in the form of an object, and via this sketch information, the processing flow for implementing the image behavior is written in the FBD language with the FBD drawing tool 16. Thus, the information processing apparatus 12A provided with the drawing tool 14 and the information processing apparatus 12B provided with the FBD drawing tool 16 can be different apparatuses, and as a result, the task of drawing images and the task of creating a program with the FBD language can be performed separately.

Furthermore, in the program creating system 10 according to this embodiment, in the case where new behavior is defined for the image with the FBD drawing tool 16, parameters for implementing that behavior are inserted in the sketch information, which is then stored in the image display unit 20; therefore, when the program representing the processing described with the FBD drawing tool 16 is executed, the image display unit 20 can display the image in such a manner as to implement the behavior defined with the FBD drawing tool 16.

Although the present invention has been described above using the above embodiment, the technical scope of the present invention is not restricted to the scope of the description of the above embodiment. Various alterations or improvements can be made to the above embodiment so long as they do not depart from the spirit of the invention, and forms in which such alterations or improvements have been made are also encompassed by the technical scope of the present invention.

For example, the above-described embodiment has been described in terms of a case where the program creating system 10 is provided with the information processing apparatus 12A provided with the drawing tool 14 and the information processing apparatus 12B provided with the FBD drawing tool 16; however, the present invention is not restricted thereto, and a form in which the drawing tool 14 and the FBD drawing tool 16 are both provided in the same information processing apparatus is also permissible.

Furthermore, the above-described embodiment has been described in terms of a case where the information processing apparatus 12C is provided with the computational processing unit 24 that executes the program described with the FBD drawing tool 16 and the image display unit 20 that displays the image represented by the sketch information; however, the present invention is not restricted thereto, and a form in which the computational processing unit 24 and the image display unit 20 are provided in different information processing apparatuses is also permissible.
In the case of this form, the program is stored in the information processing apparatus provided with the computational processing unit 24, and the sketch information is stored in the information processing apparatus provided with the image display unit 20. Then, the information processing apparatus provided with the computational processing unit 24 and the information processing apparatus provided with the image display unit 20 perform transmission and reception of information via a communication line, thereby displaying on the image display unit 20 an image in such a manner as to implement the behavior represented by the sketch information.

Furthermore, the above-described embodiment has been described in terms of a case where the information processing apparatus 12D is provided with the FBD monitoring tool 3C; however, the present invention is not restricted thereto, and a form in which the information processing apparatus 12C is provided with the FBD monitoring tool 30 is also permissible.

Moreover, the above-described embodiment has been described in terms of a case where the program is described using the FBD language; however, the present invention is not restricted thereto, and a form in which the program is described using the Ladder language is also permissible.

### {Reference Signs List}

| | |
|---|---|
| 10 | program creating system |
| 14 | drawing tool |
| 16 | FBD drawing tool |
| 20 | image display unit |
| 24 | computational processing unit |

## Claims

1. A program creating apparatus for creating a program causing a computer to execute processing for controlling an image displayed on a screen of an image display device, comprising:
drawing means for drawing an image that implements prescribed behavior on the screen of the image display device; and
processing describing means for defining the behavior that the image implements, by handling the image drawn by the drawing means as an object and connecting a signal line to the object to make the object implement the behavior, and for describing a processing flow for the image to implement the defined behavior with a function block diagram language.

2. A program creating apparatus according to Claim 1, wherein
the image drawn with the drawing means has information representing the image as the object; and
the processing describing means describes the processing flow for implementing the behavior of the image with the function block diagram via the information.

3. A program creating apparatus according to Claim 2, wherein, when a new behavior is defined for the image by the processing describing means, a parameter for implementing the behavior is inserted in the information, and the information is stored in the image display device.

4. An image control system comprising:
an image display device that stores attributes of an image drawn by drawing means and information representing behavior that the image implements; and
a computing device that stores a program describing, with a function block diagram language, a processing flow for the image represented by the information to implement the behavior represented by the information,
wherein the computing device executes processing represented by the program, and
the image display device displays the image in such a manner as to implement the behavior represented by the information based on details of the processing performed by the computing device.
